# EUROPEAN PATENT SPECIFICATION

(11) **EP 2 980 436 B1**
(45) Date of publication and mention of the grant of the patent: **10.10.2018**
(21) Application number: 14178823.2
(22) Date of filing: 28.07.2014
(51) Int. Cl.: F16D 65/12

(54) **Disc for disc brakes and process for manufacturing the same**
Scheibe für Scheibenbremsen und Verfahren zur Herstellung davon
Disque pour freins à disque et son procédé de fabrication

(43) Date of publication of application: 03.02.2016
(73) Proprietor: Brembo SGL Carbon Ceramic Brakes S.p.A., 24040 Stezzano (BG) (IT); Freni Brembo S.p.A., 24035 Curno (Bergamo) (IT)
(72) Inventor: Bonfanti, Roberto, 24035 CURNO (BG) (IT); Piavani, Riccardo, 24035 CURNO (BG) (IT); Milesi, Andrea, 24035 CURNO (BG) (IT); Tironi, Giovanni Mario, 24035 CURNO (BG) (IT)
(74) Representative: Brasca, Marco

(56) References cited:
- WO-A1-2006/046258
- DE-A1-102009 013 358
- US-A- 6 152 270
- US-A1- 2013 037 359

## Description

### Field of the art

The present invention relates to a disc for disc brakes, to a process for manufacturing such disc and to a braking system comprising such disc. The invention is in particular related to disc brakes provided with a braking band made of composite material comprising ceramic material reinforced with carbon fibers. The invention is preferably related to disc brakes for motor vehicles, such as high performance cars. A disc brake comprises a bell, configured to be connected to an arm of a vehicle to rotate integral with a wheel rim, and an external band provided with side braking surfaces suitable to cooperate with brake calipers of the vehicle to exert a braking action on the same.

### State of the art

Document DE102009013358A illustrates a brake disc for vehicles. The disc has a friction ring with an opening and a cup that is molded at the friction ring, where the cup is made of aluminum and/or the friction ring is made of ceramic e.g. carbon/silicon carbon composite material. The friction ring is provided with two ring elements whose front ends are connected with each other by bars that project into the opening where ends of the bars are molded into a flange of the cup.

Document EP1117943 discloses a method for producing brake disks consisting of ceramic parts with metal hubs. At least one ceramic part is placed in a diecasting mould and is joined to melted metals by casting under pressure, in order to obtain a rotationally symmetrical body. Said body contains at least one ceramic (composite) segment that is symmetrical to the axis of rotation of the metal body and projects beyond at least one surface of the metal body that is perpendicular to said axis.

Document US 6 152 270 A discloses a disc of a disc brake for vehicles comprising a hub and an annular brake member traversed by ventilation ducts extending between an internal annular face element and an external annular face element of the annular brake member interconnected by bridging columns. A projecting portion of the brake member being embedded in the hub during the manufacture of the hub by casting in a light alloy.

Document US 2013/037359 A1 discloses a brake disc which includes a friction unit having a coupling aperture formed at a center thereof, insert protrusions and depressions are provided in a sawtooth formation at predetermined intervals along a circumference of the coupling aperture, wherein chamfers are formed at a predetermined angle on one or more of the upper and lower surfaces of the insert protrusions, and first locking parts locked into upper or lower spaces of the depressions. A hat unit, formed of a material different from that of the friction unit, is coupled to the coupling aperture of the friction unit and includes insert recesses formed along a circumference thereof so that the insert protrusions are fitted therein and second locking parts formed at predetermined intervals in the insert recesses so that they are inserted into the depressions and engage with the first locking parts.

### Object of the invention

The Applicant has observed that the disc manufactured by co-casting of the prior art, while providing a simpler and cheaper product (since the number of working steps is lowered, the parts of the assembly are less being absent the mounting hardware such as bolts, mounting of bell and braking band need not to be performed) cannot grant performance and safety of the traditional discs made of assembled parts.

The Applicant observed that the critical area of the prior art co-cast discs is the interface area between friction disc or discs and the metal bell or drum, i.e. the zones of connection between said friction disc or discs and the metal bell.

These areas are critical for the making process, because of the interaction between the metal of the bell and composite friction disc. The Applicant observed that, during cooling of the melted metal, the thermal shrinkage of the same tends to make the bell depart from the originally matching shape of the radially external band.

The same areas are also critical during the working life cycle of the brake disc equipping a vehicle. Indeed, the Applicant observed that such areas presents a very high level of local stresses due to the transmission of the braking torque from the radially external band to the bell and then to the vehicle and of thermal stresses due to energy dissipation occurring during braking.

In such context, the Applicant has set the objective of improving reliability and performance of the co-cast composite brakes discs and of improving the manufacturing process of the same in terms of reduction of manufacturing steps and simplification of each step.

In particular, one objective is to optimize the coupling zones between the bell and the external braking band both during co-casting and during working of the finished and installed brake disc.

### Summary of the invention

The Applicant has found that such objectives can be obtained by means of a particular design of the protrusions in composite material which belong to the external braking band and which are configured to link said band to the inner metal bell.

More specifically, according to one aspect, the present invention relates to a disc for disc brakes according to claim 1.

According to a different aspect, the present invention relates to a process for manufacturing a disc for disc brakes, comprising: producing a radially external band in composite material comprising carbon fibers; wherein the radially external band is shaped to form a plurality of protrusions of said composite material; wherein said protrusions are placed around the symmetry axis and jut radially inwards; wherein, in a radial plane, each protrusion tapers towards the symmetry axis; inserting said radially external band in a mold cavity; introducing a melted metal in the mold cavity to form at least part of a bell of the disc co-casted with the external band; wherein the melted metal partly surrounds said protrusions provided on the radially external band.

According to a different aspect, the present invention relates to a radially external band presenting side braking surfaces suitable to cooperate with brake calipers to exert a braking action on a vehicle, said radially external band being in composite material comprising carbon fibers; wherein the radially external band presents a plurality of protrusions of said composite material; wherein said protrusions are placed around the symmetry axis; wherein, in a radial plane, a terminal portion of each protrusion juts radially inwards and tapers towards the symmetry axis; wherein the bell incorporates at least the terminal portions of said protrusions.

In other words, a plurality of said protrusions protrude like teeth from an inner radial edge of the radially external band and the metal material of the bell partly surrounds said teeth and lies also between said protrusions. Said protrusions are preferably equally spaced along a circumferential direction around a symmetry axis of the disc (which is the axis around which the disc rotates with the wheel).

Please note that a radial plane is a plane extending radially from the symmetry axis wherein said symmetry axis lies on said plane.

The Applicant verified that the tapering portion of the protrusions made of composite material, around which the metal of the bell is clung, assures an intimate and safe connection between the metal co-casted bell and the external friction band.

In particular, the Applicant verified that said geometric solution improves the interaction between the composite material and the melted metal during casting and the following cooling and solidification in terms of wettability, shrinkage of the melted metal and stresses.

The Applicant also verified that the tapering portion according to the invention allows to transmit high braking torques from the band to the bell avoiding at the same time the generation of dangerous local stresses.

The Applicant also verified that the tapering portion according to the invention allows to limit the local stresses due to the thermal shock both in the external band (in particular while braking) and in the inner metal bell (during cooling after braking).

Further, the Applicant verified that the claimed structure allows to make the production process of the composite external band, of the bell and of the overall disc easier and cheaper.

The present invention, in at least one of the aforesaid aspects, can have one or more of the preferred characteristics that are described hereinbelow.

Preferably, said composite material comprises ceramic material reinforced with carbon fibers.

Preferably, the metal of the bell is aluminum alloy.

Preferably, the whole metallic bell is co-casted on the external band.

In one aspect, a ratio between a maximum axial dimension and a minimum axial dimension of the terminal portion of each protrusion is comprised between about 1,5 and about 2,5, preferably between about and about 1,8 and about 2,2.

In one aspect, a ratio between a minimum axial dimension and a radial dimension of the terminal portion of each protrusion is comprised between about 0,8 and about 1,2, preferably between about and about 0,9 and about 1,1.

Preferably, the maximum axial dimension is comprised between about 10mm and about 20mm. Preferably, the radial dimension is comprised between about 5mm and about 10mm.

The axial dimensions are measured in a radial plane and parallel to the symmetry axis of the disc.

In one aspect, said terminal portion presents a first side surface substantially perpendicular to the symmetry axis (parallel to the side braking surfaces of the radially external band) and a second slanted side surface axially opposite to the first side surface. Preferably, said slanted side surface delimits with a plane parallel to the side braking surfaces of the radially external band an angle comprised between about 40° and between about 50°. In one aspect, said terminal portion presents a radially inner surface shaped like a tubular sector. Preferably, the metal of the bell lies in contact with the first side surface, with the second slanted side surface and with the radially inner surface. In one aspect, the radially external band presents an inner tubular surface facing the symmetry axis and delimiting with each of the first side surfaces of the terminal portions a corner, wherein the metal of the bell lies in said corner.

In one aspect, said protrusion presents opposite lateral surfaces substantially perpendicular to a circumferential direction (wherein the circumferential direction is the tangential direction). Preferably, the lateral surfaces of each protrusion converge towards the symmetry axis. Preferably, the lateral surfaces lies on radial planes. Preferably, each protrusion extends circumferentially along an arc comprised between about 6°and about 15°, preferably between about 8° and about 12°. Preferably, the metal of the bell lies in contact with said opposite lateral surfaces. In other words, the lateral surfaces of adjacent protrusions delimit a seat for the metal of the bell. The metal of the bell exchanges forces (due to the braking torque) with the protrusions mainly through said lateral surfaces lying on radial planes and this structure contributes to avoid concentration of local stresses.

In one aspect, the protrusions are axially offset with respect to a median plane of the side braking surfaces. The median plane is a plane of symmetry of the side braking surfaces and is parallel to the side braking surfaces. In one aspect, the protrusions protrude axially from at least one of the side braking surfaces. In one aspect, the slanted side surface connects each terminal portion to a respective axial portion. In one aspect, the metal of the bell lies in contact with said axial portion. In one aspect, the radially external band presents an outer tubular surface facing the symmetry axis and an annular surface connecting said inner and said outer tubular surfaces, wherein said protrusions are formed on said surfaces.

In one aspect, the radially external band comprises an annular body placed at a radially inner edge of the radially external band, wherein said protrusions are formed on said annular body. In one aspect, the annular body is axially offset with respect to the median plane of the side braking surfaces.

In one aspect, the annular body protrudes axially and radially from a main body of the radially external band carrying the side braking surfaces. In one aspect, the annular body presents the outer tubular surface, the annular surface and the inner tubular surface and carries the protrusions. In one aspect, the terminal portion of each protrusion protrudes radially from the inner tubular surface. In one aspect, the axial portion of each protrusion protrudes axially from the annular surface. In one aspect, the axial portion of each protrusion protrudes radially from the outer tubular surface.

In one aspect, the radially external band comprises two opposite annular members connected to each other and each carrying one of the side braking surfaces, wherein the protrusions are shaped at a radially inner edge of one annular member only. In one aspect, cooling channels are formed between said two opposite annular members. In one aspect, the protrusions are axially shifted apart with respect to said cooling channels. In one aspect, the protrusions are shaped at the radially inner edges of both annular members. In one aspect, the bell is connected to radially inner edge of one annular member only. In one aspect, the bell is connected to radially inner edges of both annular members.

In one aspect, the radially external band is produced by: mixing raw material carbon fiber reinforced polymer (CFRP); molding the carbon fiber reinforced polymer; adding the ceramic material by pyrolysis and infiltration into the carbon fiber reinforced polymer.

In one aspect, after co-casting of the metal bell, the rough co-casted bell is subjected to machining.

According to a further different aspect, the present invention relates to a braking system comprising at least a disc according to one or more of the previous aspects and preferably manufactured according to a process for making a disc according to one or more of the previous aspects.

### Brief description of the drawings

Further characteristics and advantages will be more evident from the detailed description of a preferred but not exclusive embodiment of a disc for disc brakes in accordance with the present invention.

Such description will be set forth hereinbelow with reference to the enclosed drawings, provided only for exemplifying and hence non-limiting purposes, in which:
- figure 1 shows a perspective view of a disc for disc brakes according to the present invention;
- figure 2 shows a perspective view of a sectioned part of an element of the disc of figure 1;
- figure 3 is an enlarged view of a portion of the sectioned part of figure 2;
- figure 4 shows a different perspective view of the sectioned part of figure 2;

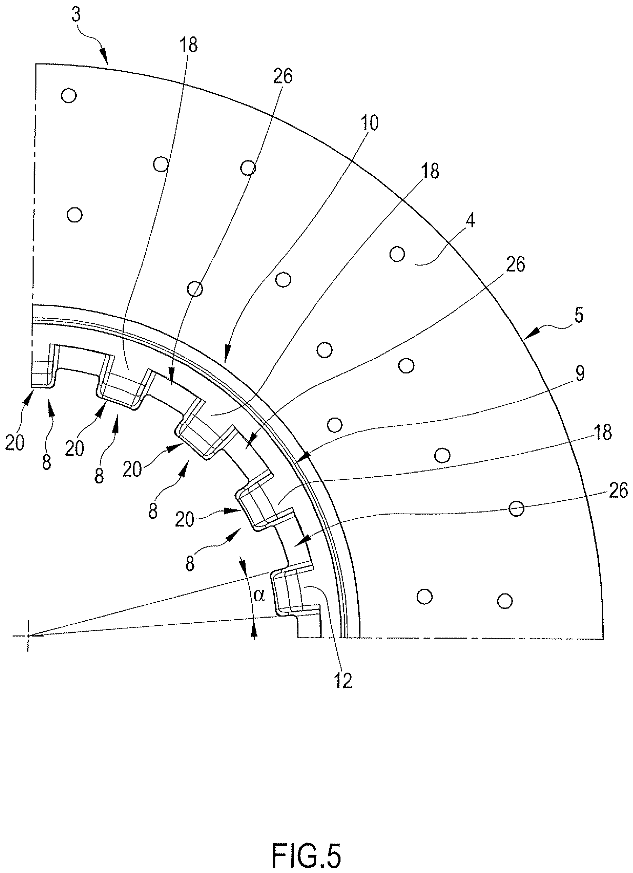

- figure 5 is a plan view of a portion of the element of figures 2 to 4;
- figure 6 is a sectioned and an enlarged view of a particular of the element of figures 2 to 5;
- figure 7 shows a sectioned half-portion of the disc of figure 1 in a step of the manufacturing process according to the present invention; and
- figure 8 shows the sectioned half-portion of figure 7 in a different step of the manufacturing process.

### Detailed description of a preferred embodiment of the invention

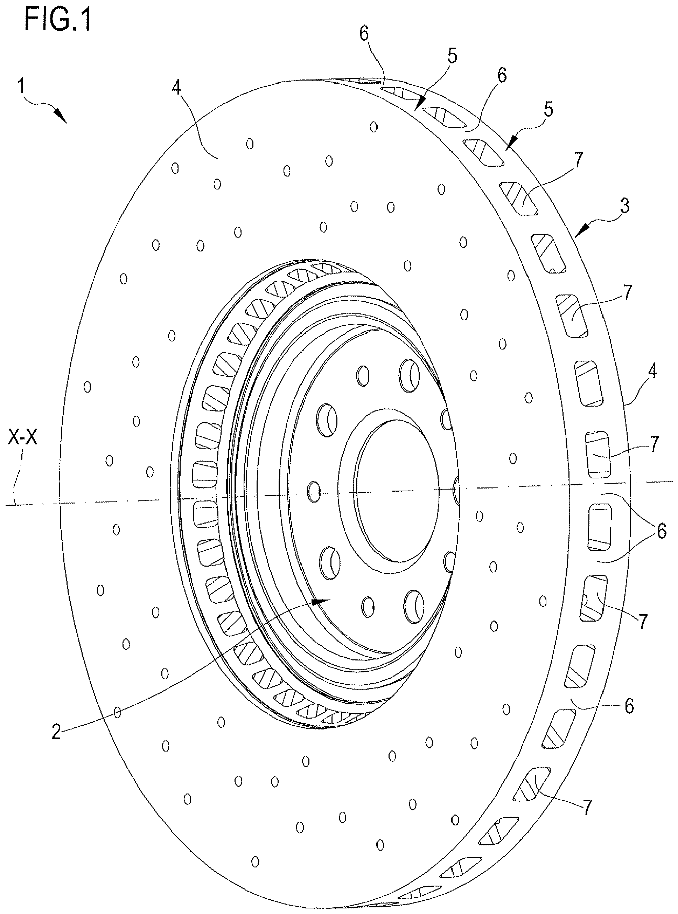

With reference to figure 1, reference number 1 indicates a disc for disc brakes for vehicle wheels in accordance with the present invention.

The disc 1 comprises a bell or cup 2 configured to be connected by bolts to the hub of a vehicle wheel and a radially external band 3 or ring presenting side braking surfaces 4 suitable to cooperate with brake calipers (not shown) to exert a braking action on the vehicle. The radially external band 3 presents a central hole configured to accommodate the bell 2.

The radially external band 3 comprises two opposite annular members 5 which surround the bell 2, are placed axially side by side and are connected to each other by means of spacing walls 6. Said spacing walls 6, together with the annular members 5, delimit inside the radially external band 3 a plurality of cooling channels 7 which extend substantially radially. Each of the annular members 5 carries one of the side braking surfaces 4.

The bell 2 is made of aluminum alloy and the radially external band 3 is made of carbo-ceramic composite material, i.e. ceramic material reinforced with carbon fibers. The radially external band 3 is manufactured, according to a process known per-se, by molding a mix of carbon fiber reinforced polymer and then adding, by pyrolysis and infiltration, ceramic material into the carbon fiber reinforced polymer. Before pyrolysis and infiltration, the radial external band 3 is drilled to make ventilation holes.

According to the present invention, the radially external band 3 is shaped to present a plurality of protrusions 8 jutting out from a radially inner edge 9 of the radially external band 3 towards a symmetry axis "X-X" of the disc 1 (which is the axis of rotation of the disc 1 and the wheel). The protrusions 8 delimit a central passage of the radially external band 3. Such protrusions 8 are made in one piece with the overall radially external band 3 during the molding process.

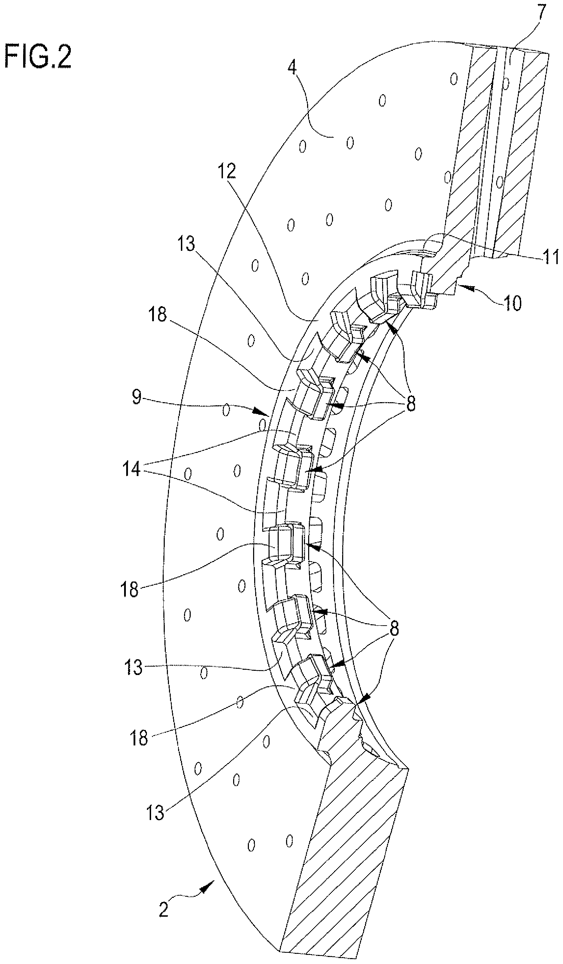

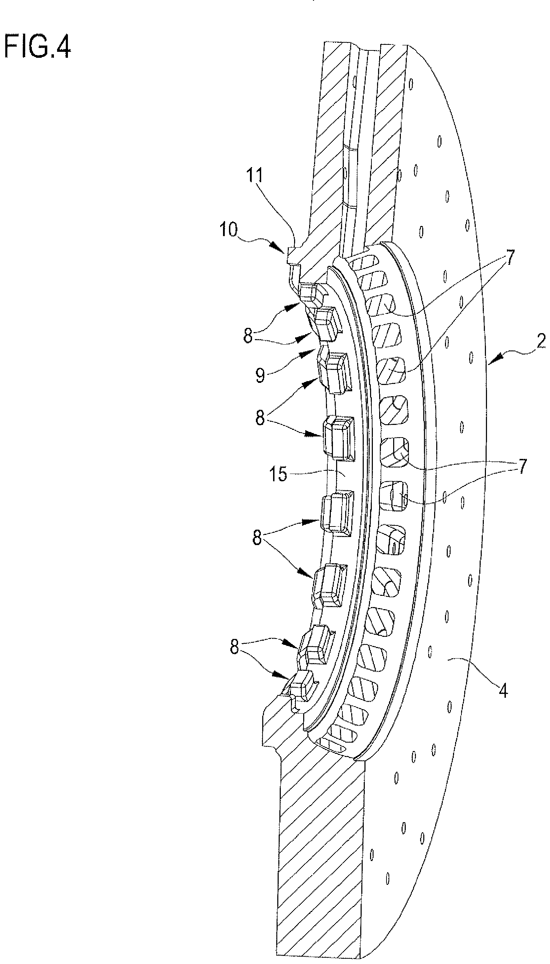

According to the embodiment shown in the attached figures, an annular body 10 is placed at the radially inner edge 9 of the radially external band 3. Said annular body 10 is coaxial to the symmetry axis "X-X" and is made in one piece with the annular members 5. As well shown in figures 2, 4 and 6 to 8, the annular body 10 is integral with one of the two annular members 5 and is axially offset with respect to a median plane "P" of said annular members 5. The annular body is also axially offset with respect to the mouths of the cooling channels 7 which opens radially inwards towards the symmetry axis "X-X" (see figure 4) and are in fluid communication with the ventilation holes. In particular, said annular body 10 protrudes axially and radially from the annular member 5 which is attached to.

Said annular body 10 presents a circumferential surface 11 facing radially outwards, i.e. opposite to the symmetry axis "X-X", and joined to the respective braking surface 4. An annular surface 12 parallel to the braking surfaces 4 develops from said circumferential surface 11. The annular body 10 further defines a circular step comprising an outer tubular surface 13, coaxial with the symmetry axis "X-X" and departing from the annular surface 12, a further annular surface 14 departing from the outer tubular surface 13 and parallel to the braking surface 4 and an inner tubular surface 15 departing from the further annular surface 14 and coaxial with the symmetry axis "X-X". The annular surface 12 develops uninterrupted around the symmetry axis "X-X". The outer tubular surface 13 and the further annular surface 14 are each made of a succession of portions divided by the protrusions 8 as explained more in details further on. The inner tubular surface 15 comprises an uninterrupted portion and a succession of portions divided by the protrusions 8. The annular surface 12 and the outer tubular surface 13 delimit between them a succession of arched and sharp edges. The outer tubular surface 13 and the further annular surface 14 delimit between them a succession of arched and recessed corners. The further annular surface 14 and the inner tubular surface 15 delimit between them a succession of arched and sharp edges. The annular body 10 further presents another annular surface 16 axially opposite with respect to said further annular surface 14 and parallel to the same. Said another annular surface 16 is place close to the mouths of the cooling channels 7 and faces the median plane "P" of the annular members 5.

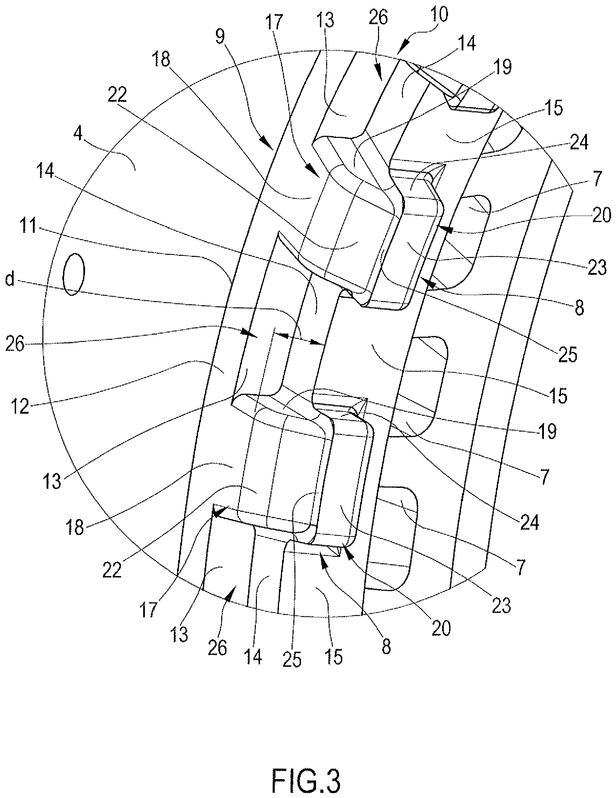

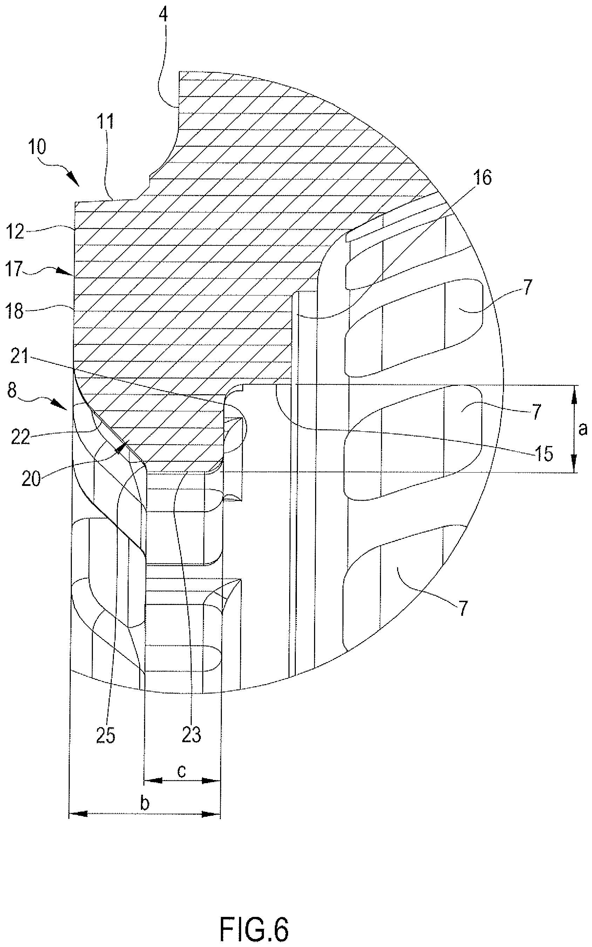

Each protrusion 8 is shaped like a sort of tooth which develops from outer tubular surface 13, the further annular surface 14 and the inner tubular surface 15 and is made integral (in one piece) with the annular body 10 and with the overall radially external band 3. Each protrusion 8 comprises an axial portion 17 jutting out axially from a side of the radially external band 3, in particular from the further annular surface 14, and presents a front surface 18 developing from the annular surface 12 and flush with said annular surface 12. The front surface 18 is parallel to the side braking surfaces 4. Lateral surfaces 19 of said axial portion 17 (see figure 3) connects the front surface 18 with the further annular surface 14. Said lateral surfaces 19 lie in respective radial planes and therefore converge towards the symmetry axis "X-X". Each protrusion 8 further comprises a terminal portion 20 (figures 3 and 6 to 8) jutting radially inwards towards the symmetry axis "X-X". Said terminal portion 20 presents a first side surface 21 (figures 6 to 8) parallel to the braking surface 4 and facing the cited median plane "P". Said first side surface 21 develops perpendicularly from the inner tubular surface 15. Said terminal portion 20 presents a second slanted side surface 22 axially opposite to the first side surface 21 and developing with no interruption from the front surface 18 of the axial portion 17. On moving towards the symmetry axis "X-X", the second slanted side surface 22 moves closer to the first side surface 21 so that, in a radial plane, the terminal portion 20 tapers towards said symmetry axis "X-X". The second slanted side surface 22 and the first side surface 21 of each protrusion 8 are connected one to the other by a radially inner surface 23 shaped like a tubular sector and by two opposite lateral surfaces 24 (figure 3 and 6 to 8). Between the lateral surfaces 19 of the axial portion 17 and the lateral surfaces 24 of the terminal portion 20 and between the second slanted side surface 22 and the radially inner surface 23, a rim surface 25 is delimited which is substantially parallel to the braking surface 4. The lateral surfaces 19 of the axial portion 17 and the lateral surfaces 24 of the terminal portion 20 are placed on different and parallel radial planes.

By way of example, the terminal portion 20 of said protrusion 8 presents a radial dimension "a" of about 7mm, a maximum axial dimension "b" (measured at the inner tubular surface 15) of about 10mm, a minimum axial dimension "c" (measured at the radially inner surface 23) of about 5mm. An axial dimension "d" of the axial portion 17 of the protrusion 8 measured from the further annular surface 14 is about 8mm.

Said protrusions 8 are disposed in succession around the symmetry axis "X-X" and are equally spaced one from the other along the circumferential direction. In the illustrated embodiment, each of the eighteen protrusions 8 extends circumferentially along an arc "α" of about 10°. Two subsequent protrusions 8 delimit between them (between facing opposite lateral surfaces 19) a seat 26.

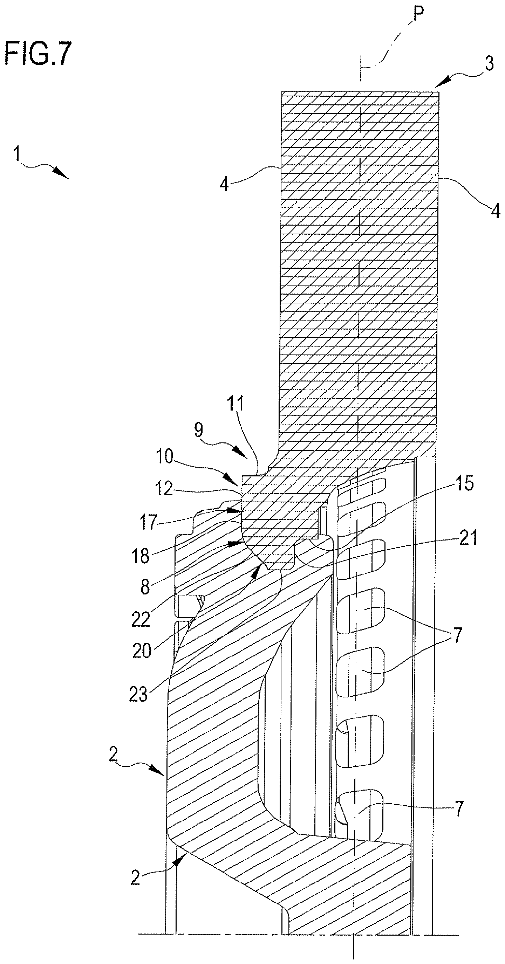

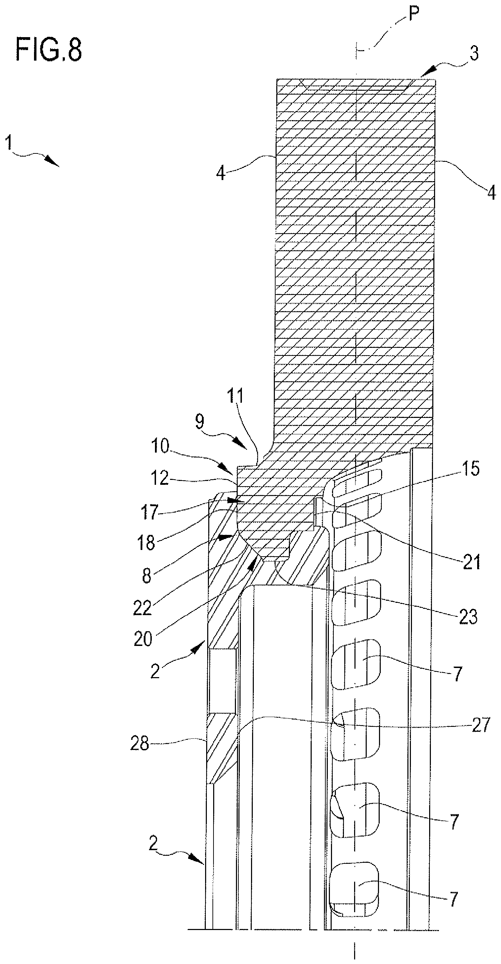

Once that the radially external band 3 with its protrusions 8 is ready, making of the bell 2 is performed by co-casting on said band 3 the aluminum alloy. To this aim, the radially external band 3 is placed in a cavity of a mold (insertion in shell) and melted aluminum is poured in the mold. The cavity of the mold is so shaped that the melted aluminum partly surrounds the protrusions 8 and enters the seats 26. In particular, the melted aluminum covers in part the annular surface 12, all the front surface 18 of each axial portion 17 of the protrusions 8, the first side surface 21, the second slanted surface 22 and the radially inner surface 23 and the lateral surfaces 24 of each terminal portion 20 of the protrusions 8. Further, the melted aluminum covers the inner tubular surface 15, the outer tubular surface 13, the further annular surface 14 and the lateral surfaces 19 of each axial portion 17 of the protrusions 8. Once solidified, the bell 2 presents radial lugs which are placed inside the seats 26 formed between the protrusions 8 of the radial external band 3. After solidification of aluminum, the disc 1 with the raw bell 2 (shown in figure 7) is extracted from the mold and sprue removal performed. Then the raw bell 2 is drilled to make holes for the studs of the vehicle hub and for the shaft and machined to define the plane of coupling 27 with the vehicle hub and the axially opposite plane 28 (figure 8).

In a further embodiment, not shown, the annular body 10 and the protrusions 8 are provided on both the annular members and the bell 2 is joined to both said annular bodies 10.

In a further embodiment not shown, only the radially peripheral part of the metallic bell 2 which is in contact with the external band 3 is co-casted with said external band 3 while an inner part of the same bell 2 could be produced separately and then welded to said radially peripheral part.

## Claims

1. Disc for disc brakes, comprising a metallic bell (2) and a radially external band (3) extending around a symmetry axis (X-X), said radially external band (3) presenting side braking surfaces (4) suitable to cooperate with brake calipers to exert a braking action on a vehicle;
wherein at least part of the metallic bell (2) is co-casted on the radially external band (3);
wherein the radially external band (3) is shaped to form a plurality of protrusions (8) placed around the symmetry axis (X-X);
wherein, in a radial plane, a terminal portion (20) of each protrusion (8) juts radially inwards and the co-casted bell (2) incorporates at least said terminal portions (20);
wherein, in a radial plane, each terminal portion (20) tapers towards the symmetry axis (X-X);
**characterized in that**:
said radially external band (3) with its protrusions (8) is of a composite material comprising carbon fibers; and **in that**:
each protrusion (8) comprises an axial portion (17) jutting out axially from a side of the radially external band (3).

2. Disc according to the preceding claim, wherein said terminal portion (20) presents a first side surface (21) substantially perpendicular to the symmetry axis (X-X) and a second slanted side surface (22) axially opposite to the first side surface (21).

3. Disc according to one of the preceding claims, wherein said terminal portion (20) presents a radially inner surface (23) shaped like a tubular sector.

4. Disc according to the preceding claim when depending on claim 2, wherein the metal of the bell (2) lies in contact with the first side surface (21), with the second slanted side surface (22) and with the radially inner surface (23).

5. Disc according to one of the preceding claims, wherein each protrusion (8) presents two opposite lateral surfaces (19, 24) substantially perpendicular to a circumferential direction, wherein the lateral surfaces (19, 24) of each protrusion (8) converge towards the symmetry axis (X-X).

6. Disc according to the preceding claim, wherein the lateral surfaces (19, 24) lies on radial planes.

7. Disc according to the preceding claims 5 or 6, wherein the lateral surfaces (19) of adjacent protrusions (8) delimit a seat (26) for the metal of the bell (2), wherein the metal of the bell (2) lies in contact with said opposite lateral surfaces (19).

8. Disc according to claim 2 or to any of claims 3 to 7 when depending on claim 2, wherein the slanted side surface (22) connects each terminal portion (20) to a respective axial portion (17).

9. Disc according to one of the preceding claims, wherein the radially external band (3) comprises two opposite annular members (5) connected to each other and each carrying one of the side braking surfaces (4), wherein the protrusions (8) are shaped at a radially inner edge (9) of one annular member (5) only.

10. Disc according to the preceding claim, wherein cooling channels (7) are formed between said two opposite annular members (5) and the protrusions (8) are axially shifted apart with respect to said cooling channels (7).

11. Disc according to one of the preceding claims, wherein the composite material comprises ceramic material reinforced with carbon fibers.

12. Disc according to one of the preceding claims, wherein the metal of the bell (2) is aluminum alloy.

13. Braking system comprising at least a disc according to one or more of the previous claims.

14. Process for manufacturing a disc for disc brakes, wherein the disc (1) comprises the features of one or more of the preceding claims from 1 to 12, wherein the process comprises:
producing a radially external band (3) in composite material comprising carbon fibers; wherein the radially external band (3) is shaped to form a plurality of protrusions (8) of said composite material; wherein said protrusions (8) are placed around the symmetry axis (X-X) and jut radially inwards; wherein, in a radial plane, each protrusion (8) tapers towards the symmetry axis (X-X);
inserting said radially external band (3) in a mold cavity;
introducing a melted metal in the mold cavity to form at least part of a bell (2) of the disc (1) co-casted with the external band (3);
wherein the melted metal partly surrounds said protrusions (8) provided on the radially external band (3).

## Patentansprüche

1. Scheibe für Scheibenbremsen, umfassend eine metallische Glocke (2) und ein radial äußeres Band (3), welches sich um eine Symmetrieachse (X-X) erstreckt, wobei das radial äußere Band (3) Seitenbremsflächen (4) aufweist, welche dazu geeignet sind, mit Bremssätteln zusammenzuwirken, um eine Bremshandlung auf ein Fahrzeug auszuüben;
wobei wenigstens ein Teil der metallischen Glocke (2) an dem radial äußeren Band (3) mit angegossen ist;
wobei das radial äußere Band (3) geformt ist, eine Mehrzahl von Vorsprüngen (8) zu bilden, welche um die Symmetrieachse (X-X) platziert sind;
wobei, in einer radialen Ebene, ein Endabschnitt (20) von jedem Vorsprung (8) radial nach innen hervorragt und die mit angegossene Glocke (2) wenigstens die Endabschnitte (20) umfasst;
wobei, in einer radialen Ebene, sich jeder Endabschnitt (20) in Richtung der Symmetrieachse (X-X) verjüngt;
**dadurch gekennzeichnet, dass**:
das radial äußere Band (3) mit seinen Vorsprüngen (8) aus einem Verbundmaterial besteht, umfassend Carbonfasern; und, dass:
jeder Vorsprung (8) einen axialen Abschnitt (17) umfasst, welcher axial von einer Seite des radial äußeren Bands (3) hervorragt.

2. Scheibe nach dem vorhergehenden Anspruch, wobei der Endabschnitt (20) eine erste Seitenfläche (21), welche im Wesentlichen rechtwinklig zu der Symmetrieachse (X-X) ist, und eine zweite geneigte Seitenfläche (22) aufweist, welche zu der ersten Seitenfläche (21) axial entgegengesetzt ist.

3. Scheibe nach einem der vorhergehenden Ansprüche, wobei der Endabschnitt (20) eine radial innere Fläche (23) aufweist, welche wie ein röhrenförmiger Abschnitt geformt ist.

4. Scheibe nach dem vorhergehenden Anspruch, wenn abhängig von Anspruch 2, wobei das Metall der Glocke (2) in Kontakt mit der ersten Seitenfläche (21), mit der zweiten geneigten Seitenfläche (22) und mit der radial inneren Fläche (23) liegt.

5. Scheibe nach einem der vorhergehenden Ansprüche, wobei jeder Vorsprung (8) zwei gegenüberliegende laterale Flächen (19, 24) aufweist, welche im Wesentlichen rechtwinklig zu einer Umfangsrichtung sind, wobei die lateralen Flächen (19, 24) von jedem Vorsprung (8) in Richtung der Symmetrieachse (X-X) zusammenlaufen.

6. Scheibe nach dem vorhergehenden Anspruch, wobei die lateralen Flächen (19, 24) auf radialen Ebenen liegen.

7. Scheibe nach den vorhergehenden Ansprüchen 5 oder 6, wobei die lateralen Flächen (19) von benachbarten Vorsprüngen (8) einen Sitz (26) für das Metall der Glocke (2) begrenzen, wobei das Metall der Glocke (2) in Kontakt mit den gegenüberliegenden lateralen Flächen (19) liegt.

8. Scheibe nach Anspruch 2 oder nach einem der Ansprüche 3 bis 7, wenn abhängig von Anspruch 2, wobei die geneigte Seitenfläche (22) jeden Endabschnitt (20) mit einem jeweiligen axialen Abschnitt (17) verbindet.

9. Scheibe nach einem der vorhergehenden Ansprüche, wobei das radial äußere Band (3) zwei gegenüberliegende ringförmige Elemente (5) umfasst, welche miteinander verbunden sind und jeweils eine aus den Seitenbremsflächen (4) tragen, wobei die Vorsprünge (8) an nur einem radial inneren Rand (9) eines ringförmigen Elements (5) ausgebildet sind.

10. Scheibe nach dem vorhergehenden Anspruch, wobei Kühlkanäle (7) zwischen den beiden gegenüberliegenden ringförmigen Elementen (5) gebildet sind und die Vorsprünge (8) in Bezug auf die Kühlkanäle (7) axial voneinander versetzt sind.

11. Scheibe nach einem der vorhergehenden Ansprüche, wobei das Verbundmaterial keramisches Material umfasst, welches mit Carbonfasern verstärkt ist.

12. Scheibe nach einem der vorhergehenden Ansprüche, wobei das Metall der Glocke (2) eine Aluminiumlegierung ist.

13. Bremssystem, umfassend wenigstens eine Scheibe nach einem oder mehreren der vorhergehenden Ansprüche.

14. Verfahren zum Herstellen einer Scheibe für Scheibenbremsen, wobei die Scheibe (1) die Merkmale von einem oder mehreren der vorhergehenden Ansprüche 1 bis 12 umfasst, wobei das Verfahren umfasst:
Herstellen eines radial äußeren Bands (3) aus Verbundmaterial, umfassend Carbonfasern; wobei das radial äußere Band (3) geformt ist, eine Mehrzahl von Vorsprüngen (8) des Verbundmaterials zu bilden;
wobei die Vorsprünge (8) um die Symmetrieachse (X-X) platziert sind und nach radial innen hervorragen; wobei, in einer radialen Ebene, sich jeder Vorsprung (8) in Richtung der Symmetrieachse (X-X) verjüngt;
Einsetzen des radial äußeren Bands (3) in eine Formkavität;
Einfüllen eines geschmolzenen Metalls in die Formkavität, um wenigstens einen Teil einer Glocke (2) der Scheibe (1) zu bilden, welcher an das äußere Band (3) mit an gegossen wird;
wobei das geschmolzene Metall die Vorsprünge (8) teilweise umgibt, welche an dem radial äußeren Band (3) bereitgestellt sind.

## Revendications

1. Disque pour freins à disque, comprenant une cloche métallique (2) et une bande radialement externe (3) s'étendant autour d'un axe de symétrie (X-X), ladite bande radialement externe (3) présentant des surfaces de freinage latérales (4) convenant pour coopérer avec des étriers de frein pour exercer une action de freinage sur un véhicule ;
où au moins une partie de la cloche métallique (2) est co-coulée sur la bande radialement externe (3) ;
où la bande radialement externe (3) est formée pour constituer une pluralité de protubérances (8) placées autour de l'axe de symétrie (X-X) ;
où, dans un plan radial, une partie terminale (20) de chaque protubérance (8) fait radialement saillie vers l'intérieur et la cloche co-coulée (2) incorpore au moins lesdites parties terminales (20) ;
où, dans un plan radial, chaque partie terminale (20) devient plus étroite vers l'axe de symétrie (X-X) ;
**caractérisé en ce que** :
ladite bande radialement externe (3) avec ses protubérances (8) est d'un matériau composite comprenant des fibres de carbone ; et **en ce que** :
chaque protubérance (8) comprend une partie axiale (17) en saillie axialement vers l'extérieur depuis un côté de la bande radialement externe (3).

2. Disque selon la revendication précédente, dans lequel ladite partie terminale (20) présente une première surface latérale (21) sensiblement perpendiculaire à l'axe de symétrie (X-X) et une seconde surface latérale inclinée (22) axialement opposée à la première surface latérale (21).

3. Disque selon l'une des revendications précédentes, dans lequel ladite partie terminale (20) présente une surface radialement interne (23) d'une forme semblable à un secteur tubulaire.

4. Disque selon la revendication précédente lorsqu'elle dépend de la revendication 2, dans lequel le métal de la cloche (2) repose en contact avec la première surface latérale (21), avec la seconde surface latérale inclinée (22) et avec la surface radialement interne (23).

5. Disque selon l'une des revendications précédentes, dans lequel chaque protubérance (8) présente deux surfaces latérales opposées (19, 24) sensiblement perpendiculaires à un sens circonférentiel, où les surfaces latérales (19, 24) de chaque protubérance (8) convergent vers l'axe de symétrie (X-X).

6. Disque selon la revendication précédente, dans lequel les surfaces latérales (19, 24) reposent sur des plans radiaux.

7. Disque selon les revendications précédentes 5 ou 6, dans lequel les surfaces latérales (19) des protubérances adjacentes (8) délimitent une assise (26) pour le métal de la cloche (2), où le métal de la cloche (2) repose en contact avec lesdites surfaces latérales opposées (19).

8. Disque selon la revendication 2 ou selon l'une quelconque des revendications 3 à 7 lorsqu'elle dépend de la revendication 2, où la surface latérale inclinée (22) relie chaque partie terminale (20) à une partie axiale respective (17).

9. Disque selon l'une des revendications précédentes, dans lequel la bande radialement externe (3) comprend deux éléments annulaires opposés (5) reliés l'un à l'autre et chacun portant les surfaces de freinage latérales (4), où les protubérances (8) sont mises en forme au niveau d'un bord radialement interne (9) d'un élément annulaire (5) seul.

10. Disque selon la revendication précédente, dans lequel les canaux de refroidissement (7) sont formés entre lesdits deux éléments annulaires opposés (5) et les protubérances (8) sont axialement décalées à l'écart desdits canaux de refroidissement (7).

11. Disque selon l'une des revendications précédentes, dans lequel le matériau composite comprend un matériau céramique renforcé de fibres de carbone.

12. Disque selon l'une des revendications précédentes, dans lequel le métal de la cloche (2) est un alliage d'aluminium.

13. Système de freinage comprenant au moins un disque selon l'une ou plusieurs des revendications précédentes.

14. Procédé de fabrication d'un disque pour freins à disque, où le disque (1) comprend les caractéristiques d'une ou plusieurs des revendications précédentes de 1 à 12, où le procédé comprend :
la production d'une bande radialement externe (3) dans un matériau composite comprenant des fibres de carbone ; où la bande radialement externe (3) est mise en forme pour former une pluralité de protubérances (8) dudit matériau composite ; où lesdites protubérances (8) sont placées autour de l'axe de symétrie (X-X) et en saillie radialement vers l'intérieur ; où, dans un plan radial, chaque protubérance (8) s'incline vers l'axe de symétrie (X-X) ;
l'insertion de ladite bande radialement externe (3) dans une cavité de moule ;
l'introduction d'un métal fondu dans la cavité de moule pour former au moins une partie d'une cloche (2) du disque (1) co-coulée avec la bande externe (3) ;
où le métal fondu entoure partiellement lesdites protubérances (8) disposées sur la bande radialement externe (3).
